# FASCICULE DE BREVET EUROPEEN

(11) **EP 3 732 140 B1**
(45) Date de publication et mention de la délivrance du brevet: **14.01.2026**
(21) Numéro de dépôt: 18845302.1
(22) Date de dépôt: 21.12.2018
(51) Int. Cl.: C03B 40/033, C03B 23/023, C03B 23/03

(54) **PROCÉDÉ DE BOMBAGE DE FEUILLES DE VERRE**
VERFAHREN ZUM BIEGEN VON GLASSCHEIBEN
METHOD OF BENDING GLASS SHEETS

(30) Priorité: 29.12.2017 FR 1763379
(43) Date de publication de la demande: 04.11.2020
(73) Titulaire: Saint-Gobain Sekurit France, 60150 Thourotte (FR)
(72) Inventeur: NGHIEM, Bernard, 60190 ARSY (FR); SCHWEITZER, Jean-Philippe, 60300 CHAMANT (FR)
(74) Mandataire: Saint-Gobain Recherche
(86) Numéro de dépôt international: PCT/FR2018/053518
(87) Numéro de publication internationale: WO 2019/129980

(56) Documents cités:
- EP-A1- 3 275 618
- EP-A1- 3 625 182
- WO-A1-2016/152910
- BE-A- 454 662
- DE-C1- 19 914 601
- FR-A1- 2 263 201
- US-A- 3 208 839

## Description

La présente invention concerne le domaine des verres feuilletés bombés, notamment pour des applications en tant que vitrage automobile. Elle porte plus particulièrement sur un procédé de bombage simultané de feuilles de verre superposées comprenant l'utilisation d'un agent de séparation générant un dégagement gazeux dans les conditions du bombage.

Dans la production de verres feuilletés bombés tel qu'un pare-brise d'automobile, il est souvent nécessaire de procéder au bombage simultané des feuilles de verre que l'on souhaite ultérieurement assembler en un vitrage feuilleté. Plus précisément, les feuilles de verre sont superposées l'une au-dessus de l'autre et chauffées à une température appropriée pour obtenir la déformation simultanée et similaire des feuilles de verre par un procédé de bombage par gravité, par pressage et/ou par aspiration. Les feuilles de verre ainsi bombées doivent être séparées l'une de l'autre avant les opérations de feuilletage. Après séparation, le feuilletage est ensuite réalisé par insertion d'un intercalaire de feuilletage généralement constitué d'une feuille de polymère tel que le polyvinylbutyral.

Il arrive cependant que les feuilles de verre adhèrent l'une à l'autre par fusion superficielle pendant les opérations de bombage. Pour empêcher cela, il est connu d'appliquer un agent de séparation entre les feuilles de verres avant de procéder au bombage (tel que décrit par exemple dans FR 2 263 201). On peut citer comme exemples d'agents de séparation couramment utilisés le gypse, le talc, le carbonate de calcium, le Kieselguhr ou le mica. Or, il a été constaté que ces agents de séparation, généralement pulvérulents, peuvent être à l'origine de « piqûres » sur les feuilles verres qui induisent sur le vitrage final des défauts optiques préjudiciables du point de vue esthétique. Ces piqûres sont attribuées à la déformation d'une feuille de verre autour de particules d'agent de séparation lors du bombage. Lorsque la feuille de verre supérieure s'appuie sur les particules de l'agent de séparation et que le verre devient déformable (typiquement au-dessus de 600 °C), l'appui de chaque particule peut provoquer une déformation dans la feuille supérieure et/ou inférieure.

L'objectif de la présente invention est donc de proposer un procédé de bombage simultané de feuilles de verre superposées (généralement deux feuilles de verre) permettant d'obvier aux inconvénients mentionnés ci-dessus. Plus particulièrement, la Demanderesse a remarqué qu'il était possible de réduire significativement, voire d'éviter, l'apparition de piqûres par l'utilisation d'un agent de séparation générant un dégagement gazeux dans les conditions du bombage. Ainsi, la présente invention concerne un procédé de bombage simultané de feuilles de verre superposées comprenant :
- la fourniture d'une première feuille de verre ;
- l'application d'un agent de séparation sur une surface de la première feuille de verre ;
- la fourniture d'une deuxième feuille de verre superposée sur la première feuille de verre, l'agent de séparation étant entre la première feuille de verre et la deuxième feuille de verre ;
- le chauffage des feuilles de verre à une température comprise entre 590 et 670°C autorisant leur bombage ; et
- le bombage simultané des feuilles de verre ;
caractérisé en ce que l'agent de séparation génère un dégagement gazeux dans les conditions de bombage.

Sans vouloir être lié à une quelconque théorie, il est supposé que la création d'un coussin gazeux entre les deux feuilles de verre résultant du dégagement gazeux de l'agent de séparation au moment du bombage a pour effet d'alléger voire d'annuler la pression exercée par les particules de l'agent de séparation sur la surface des feuilles de verre.

Le dégagement gazeux provient de la décomposition, dans les conditions de bombage, de l'agent de séparation. Par l'expression « les conditions de bombage » en relation avec l'agent de séparation, on entend au sens de la présente invention évidemment la température de bombage atteinte par les feuilles de verre, notamment la température maximale, mais également la cinétique de variation de température, notamment la rampe de montée en température, et l'environnement atmosphérique direct de l'agent de séparation, qui se retrouve notamment dans une atmosphère fortement confinée entre les deux feuilles de verre. Ainsi, le dégagement gazeux de l'agent de séparation se produit à des températures supérieures à 450 °C, voire supérieures à 500 °C, ou même supérieure à 550 °C et peut se prolonger jusqu'à des températures de 600 °C, 620 °C, voire 640 °C, ou même 670 °C. Il n'est évidemment pas exclu que la décomposition de l'agent de séparation puisse provoquer un dégagement gazeux en dehors de ces gammes de température. Une partie, généralement minoritaire, du dégagement gazeux peut se produire par exemple en-dessous de 450 °C et/ou au-delà de 640 °C sans affecter l'efficacité de l'agent de séparation. L'agent de séparation présente de préférence une perte de masse d'au moins 10 %, voire au moins 20 %, ou même au moins 30 % en poids entre 450 et 640 °C. Le volume de gaz libéré par l'agent de séparation entre 450 et 640 °C, de préférence entre 500 et 620 °C, est avantageusement d'au moins 0,05 L/g, voire au moins 0,1 L/g ou même au moins 0,2 g/L, et peut aller jusqu'à 1L/g, voire 0,5 L/g. Les gammes de températures du dégagement gazeux de l'agent de séparation, ainsi que sa perte de masse et le volume de gaz libéré peuvent être déterminées par analyse thermogravimétrique, éventuellement combinée à une analyse thermodifférentielle, une spectrométrie de masse et/ou une spectrométrie infrarouge, avec une vitesse de chauffe de 50 °C/min et sous un flux de même nature chimique que celui dégagé par l'agent de séparation lors du bombage, par exemple un flux de de CO₂.

Les agents de séparation connus, tels que le carbonate de calcium, le talc, la silice, l'alumine ou encore le kaolin, ne permettent pas de satisfaire ces critères. Ainsi l'agent de séparation selon l'invention n'est typiquement pas choisi parmi le carbonate de calcium, le talc, la silice, l'alumine ou le kaolin. En effet, bien qu'ils soient, pour certains, capables de libérer un dégagement gazeux, celui-ci n'intervient pas dans les conditions de bombage. Ce dégagement gazeux intervient soit bien avant d'atteindre les températures nécessaires au bombage (déshydratation du carbonate de calcium par exemple) ou au-dessus des températures de températures de bombage (décomposition du carbonate de calcium ou du talc par exemple), compte tenu des conditions du bombage impliquant en particulier une vitesse de montée en température élevée et une atmosphère confinée.

Le dégagement gazeux généré par l'agent de séparation est de préférence un dégagement de dioxyde carbone (provenant par exemple de la décomposition de groupements carbonatés) et/ou d'eau (provenant par exemple de la libération d'eau cristallisée et/ou de la décomposition de groupements hydroxylés).

L'identification d'agents de séparation appropriés peut être réalisée à l'aide d'analyses thermiques (notamment thermogravimétriques et/ou thermodifférentielles). L'agent de séparation est avantageusement choisi de façon à ce que le résidu de décomposition de celui-ci soit inerte chimiquement vis-à-vis des feuilles de verre. Par ailleurs, l'agent de séparation et le résidu après décomposition ne doivent pas subir de fusion dans les gammes de température du procédé. L'agent de séparation est de préférence choisi parmi la famille des carbonates, notamment la famille des carbonates de magnésium et/ou d'aluminium, les hydroxydes, notamment les hydroxydes d'aluminium et/ou de magnésium, les silicates mixtes hydratés, notamment les silicates d'aluminium et/ou de magnésium hydratés, ou un mélange de ceux-ci. On entend par « silicate mixte » tout silicate d'origine naturelle ou synthétique renfermant plusieurs (deux ou plus) types de cations choisis parmi les métaux alcalins (par exemple Na, Li, K) ou alcalino-terreux (par exemple Be, Mg, Ca), les métaux de transition et l'aluminium. L'expression « famille des carbonates » au sens de la présente invention désigne les carbonates, les carbonates acides (aussi appelés hydrogénocarbonates ou bicarbonates), les carbonates basiques, les formiates, les acétates et les oxalates, chacun pouvant être éventuellement hydratés. Faire varier le taux d'hydratation permet avantageusement d'affiner la température du dégagement gazeux. Un agent de séparation particulièrement adapté aux conditions de bombage selon l'invention comprend ou consiste en un carbonate acide de magnésium (par exemple de formule MgHCO₃ · *n* H₂O, avec 0≤*n*≤3), un carbonate basique de magnésium (par exemple de formule *x* MgCO₃ · Mg(OH)₂ *· n* H₂O, avec 1≤*x*≤4 et 0≤*n*≤5*,* tel que 4 MgCO₃ · Mg(OH)₂ · 5 H₂O ou 3 MgCO₃ · Mg(OH)₂ · 3 H₂O), éventuellement hydratés, ou leurs mélanges.

Les feuilles de verre constitutives du vitrage selon la présente invention peuvent être fabriquées selon différents procédés connus, tels que le procédé de flottage (ou encore « float ») dans lequel le verre fondu est déversé sur un bain d'étain en fusion, et le procédé de laminage entre deux rouleaux (ou encore « fusion draw »), dans lequel le verre fondu déborde d'un canal et vient former une feuille par gravité, ou encore le procédé dit « down-draw », dans lequel le verre fondu s'écoule vers le bas par une fente, avant d'être étiré à l'épaisseur voulue et simultanément refroidi.

Les premières et deuxièmes feuilles de verre peuvent être d'épaisseurs identiques ou différentes. Lorsqu'elles sont d'épaisseurs différentes, la première feuille de verre est généralement la feuille la plus épaisse. Les feuilles de verre ont une épaisseur d'au plus 2,6 mm, de préférence d'au plus 2,1 mm, voire d'au plus 1,6 mm.. Dans un mode de réalisation particulier, la deuxième feuille de verre est plus mince que la première feuille de verre. La deuxième feuille de verre a alors une épaisseur d'au plus 1,5 mm, voire d'au plus 1,1 mm ou même inférieure ou égale à 1 mm. Avantageusement, la deuxième feuille de verre a une épaisseur inférieure ou égale à 0,7 mm. L'épaisseur de la première feuille de verre est de préférence d'au moins 1,4 mm, voire d'au moins 1 mm. L'épaisseur de la deuxième feuille de verre est de préférence d'au moins 0,3 µm. Le fait d'utiliser des feuilles de verre mince permet d'alléger le vitrage feuilleté et par conséquent répond aux spécifications demandées actuellement par les constructeurs qui cherchent à diminuer le poids des véhicules.

L'étape de bombage des première et deuxième feuilles de verre est réalisée de façon simultanée. Les deux feuilles de verre sont positionnées l'une au-dessus de l'autre sur un support de bombage, le cas échéant, la feuille de verre la plus mince étant celle du dessus, la plus éloignée du support.

Les deux feuilles sont séparées par l'agent de séparation selon l'invention pour éviter le collage d'une feuille sur l'autre. L'agent de séparation est typiquement appliqué sur la feuille de verre sous forme de poudre sèche, de suspension ou solution dans un liquide de sorte à obtenir une dispersion homogène de celui-ci sur la surface de la feuille de verre, par exemple par de méthodes de pulvérisation bien connues de l'homme du métier. L'agent de séparation est de préférence sous forme de poudre. Il peut être appliqué sur la feuille de verre à raison d'au moins 0,1 g/m², voire 0,2 g/m², et généralement jusqu'à 50 g/m², voire 40 g/m². La poudre présente typiquement une granulométrie inférieure à 150 µm, de préférence inférieure à 100 µm, typiquement de 1 à 80 µm, voire de 5 à 60 µm, les bornes inférieures correspondant au D₅ (diamètre pour lequel 5 % des particules sont de diamètres inférieurs) et les bornes supérieures au D₉₅ (diamètre pour lequel 95 % des particules sont de diamètres inférieurs). La taille des particules peut être mesurée par diffraction laser.

Le bombage peut être effectué par toute méthode connue de l'homme du métier, par exemple des techniques de bombage par gravité (ou effondrement), par pressage, par aspiration ou des combinaisons de celles-ci. Dans un mode de réalisation particulier, le bombage peut être réalisé par gravité sur un support du type cadre ou squelette, notamment du type double squelette (tel que décrit par exemple dans EP 0448447, EP 0705798 et WO 2004/103922). Dans un autre mode de réalisation particulier, le bombage peut être notamment réalisé par formage sur une forme de bombage pleine à l'aide d'une force de plaquage. La force de plaquage du verre contre ladite forme pouvant être de nature mécanique ou pneumatique. Si la force est de nature mécanique elle peut être appliquée par une contre-forme pleine ou en forme de cadre. Notamment, il peut s'agir d'un cadre comme représenté sous la référence (4) de la figure 1 du WO 95/01938 ou le cadre segmenté référencé (9, 10, 11, 12) aux figures 1 et 2 du US 5974836. Si la force est de nature pneumatique, elle peut être appliquée par aspiration au travers de la forme pleine grâce à des orifices dans la surface de contact de ladite forme pleine comme représenté sur la figure 2 du WO 2006/072721. Une force pneumatique peut également être appliquée par l'intermédiaire d'une jupe entourant la forme pleine sur le modèle de la jupe référencée 16 à la figure 2 du WO 04087590. La jupe procure une force d'aspiration générant un flux d'air entourant la feuille en léchant sa tranche. Cependant la force pneumatique exercée par une jupe est généralement insuffisante et est de préférence complétée par une force de nature mécanique ou pneumatique au travers de la forme pleine. Dans un autre mode de réalisation particulier, le bombage peut également comprendre un formage contre une forme pleine précédé d'un bombage par un autre procédé, notamment et de préférence par un bombage par gravité. L'existence d'un tel prébombage par gravité est même préférée car il permet au final d'accroître la complexité du vitrage (plus grandes profondeurs de bombage dans toutes les directions), sans dégrader le niveau de qualité optique du vitrage.

Lors de l'étape de bombage, les feuilles de verre, au point situé sur la normale à sa surface passant par son barycentre, atteignent généralement une température comprise entre 590 et 670 °C. Pour un bombage par gravité, cette température est de préférence comprise entre 610 et 670 °C. Pour un bombage contre une forme pleine, elle est de préférence comprise entre 590 et 630 °C.

La présente invention concerne également un procédé de fabrication d'un vitrage feuilleté comprenant un procédé de bombage simultané de feuilles de verre superposées tel que décrit ci-dessus, et une étape de feuilletage des deux feuilles de verre avec un intercalaire polymérique.

Lorsque la deuxième feuille de verre est une feuille de verre mince, celle-ci est de préférence trempée chimiquement pour renforcer sa résistance mécanique. La trempe chimique est un procédé qui consiste à réaliser un échange ionique au sein de la feuille de verre : la substitution superficielle d'un ion (généralement un ion alcalin tel que le sodium ou le lithium) par un ion de rayon ionique plus grand (généralement un autre ion alcalin, tel que le potassium ou le sodium) depuis la surface du verre permet de créer en surface de la feuille de verre des contraintes résiduelles de compression permettant d'obtenir la résistance souhaitée. Dans ce cas, le procédé comprend, avant l'étape de feuilletage, une étape de trempe chimique de la deuxième feuille de verre. La trempe chimique est généralement réalisée en plaçant ladite feuille dans un bain rempli d'un sel fondu de l'ion alcalin désiré. Cet échange a lieu habituellement à une température inférieure à la température de transition du verre et à la température de dégradation du bain, avantageusement à une température inférieure à 490 °C. La durée de la trempe chimique est de préférence inférieure à 24 heures. Cependant il peut être souhaitable que le temps de la trempe chimique soit plus court pour être compatible avec les productivités des procédés de fabrication des vitrages feuilletés pour l'automobile. Dans ce cas, la durée de la trempe est par exemple inférieure ou égal à 4 heures, préférentiellement inférieur ou égal à 2 heures. Les températures et les durées de la trempe sont à ajuster en fonction de la composition du verre, de l'épaisseur de la feuille de verre, ainsi que de l'épaisseur en compression et du niveau de contraintes souhaité. On obtient notamment de bonnes performances au niveau de la trempe lorsque celle-ci est effectuée pendant une durée de 2 heures à une température de 460 °C. L'échange ionique peut être avantageusement suivi d'une étape de traitement thermique pour diminuer la contrainte de tension à cœur et augmenter la profondeur en compression.

L'étape de feuilletage est réalisée de façon connue de l'homme du métier. Elle comprend l'assemblage des feuilles de verre avec l'intercalaire thermoplastique par mise sous pression dans un autoclave et élévation de la température.

L'intercalaire polymérique placé entre les feuilles de verre est constitué d'une ou plusieurs couches de matériau thermoplastique. Il peut notamment être en polyuréthane, en polycarbonate, en polyvynilbutyral (PVB), en polyméthacrylate de méthyle (PMMA), en éthylène vinyl acétate (EVA) ou en résine ionomère. L'intercalaire polymérique peut se présenter sous la forme d'un film multicouche, possédant des fonctionnalités particulières comme par exemple de meilleures propriétés acoustiques, anti UV, etc. De façon classique, l'intercalaire polymérique comprend au moins une couche de PVB. L'épaisseur de l'intercalaire polymérique est compris entre 50 µm et 4 mm. Généralement, son épaisseur est inférieure à 1mm. Dans les vitrages automobiles, l'épaisseur de l'intercalaire polymérique est classiquement de 0,76 mm. Lorsque les feuilles de verre constitutives du vitrage sont très minces, il peut être avantageux d'utiliser une feuille polymérique d'une épaisseur supérieure à 1 mm voire supérieure à 2 ou 3 mm pour conférer de la rigidité au vitrage feuilleté, sans apporter un alourdissement trop important.

Un vitrage feuilleté bombé peut être obtenu par le procédé décrit ci-dessus. Un tel vitrage présente une qualité optique améliorée. Cette amélioration est particulièrement substantielle lorsque le bombage est un bombage par pressage. Le vitrage feuilleté ainsi obtenu constitue avantageusement un vitrage pour l'automobile et notamment un pare-brise. La deuxième feuille de verre constitue, une fois le vitrage feuilleté monté dans le véhicule, la feuille de verre interne, c'est-à-dire celle placée vers l'intérieur de l'habitacle. La première feuille de verre constitue donc celle qui est placée vers l'extérieur.

Les exemples ci-après illustrent l'invention sans en limiter la portée.

Afin d'évaluer l'efficacité des agents de séparation à l'échelle du laboratoire, une feuille de verre de de dimension 30x30 cm et d'épaisseur 1,6 mm est disposée à plat sur une feuille de vitrocéramique et chauffée dans un four. Pour une température de four stabilisée à 620 °C, la montée en température est de 11 minutes. La température maximale est ensuite maintenue pendant 9 minutes. La température maximale atteinte par la feuille de verre est de 615 °C. Ce test reproduit des conditions plus drastiques que le procédé industriel de bombage simultané de deux feuilles de verre par pressage car la feuille de vitrocéramique ne se déforme pas à ces températures.

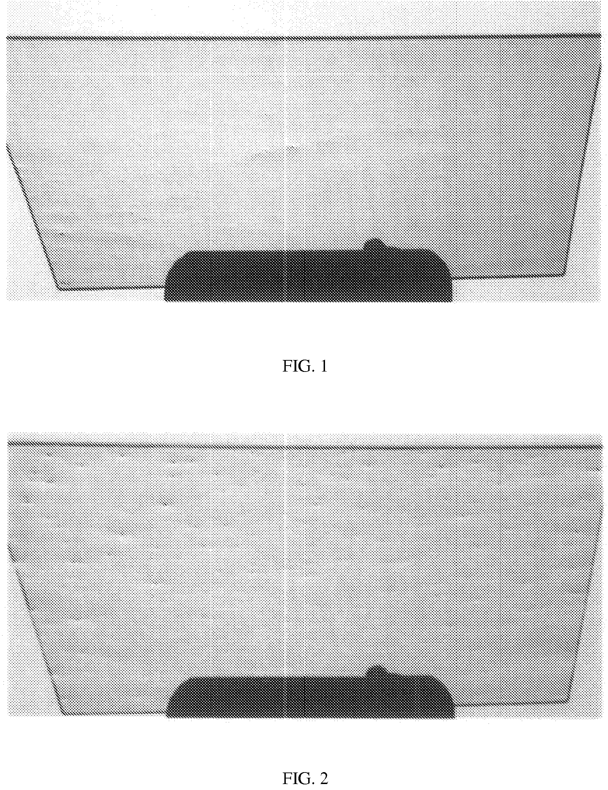

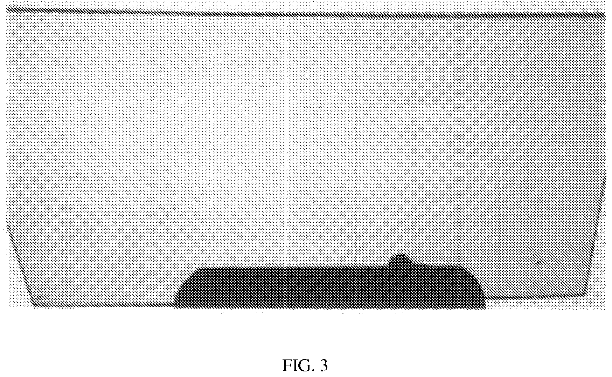

Trois séries d'essais (série 1, série 2 comparatives et série 3 selon l'invention) ont été réalisées en disposant un agent de séparation entre la feuille de verre et la feuille de vitrocéramique. L'agent de séparation utilisé est respectivement un carbonate de calcium de formule CaCO₃ pour la série 1, un carbonate acide de sodium de formule NaHCO₃ pour la série 2, et un carbonate basique de magnésium de formule 4 MgCO₃ · Mg(OH)₂ · 5 H₂O pour la série 3. Les défauts optiques (piqûres) ont ensuite été observés sur les feuilles de verres. Les feuilles de verre des séries 1 et 2 présentaient respectivement un nombre important ou très important de piqûres (voir Fig.1 et Fig.2). Au contraire, les feuilles de verre de la série 3 ne présentaient que très peu de piqûres (Fig.3).

Des analyses thermogravimétriques et thermodifférentielles de ces trois agents de séparation, couplées avec un spectromètre de masse, ont été réalisées afin de comprendre le comportement de ces agents de séparation. Celles-ci ont révélé que, dans les conditions de bombage (montée en température rapide de l'ordre de 50 °C/min, et sous flux de CO₂) le carbonate basique de magnésium se décompose en libérant de l'eau et du dioxyde de carbone principalement sur une plage de température de 450 à 640 °C. La perte de masse sur cette plage de température est d'environ 36 % et le volume de gaz libéré est d'environ 0,18 L/g. Au contraire, le carbonate de calcium ne subit aucune décomposition pour des températures inférieures à 640 °C. Quant au carbonate acide de sodium, sa décomposition s'effectue principalement à des températures inférieures à 250 °C, c'est-à-dire bien inférieures aux températures de bombage. Par ailleurs, le résidu de décomposition du carbonate acide de sodium, Na₂O, très réactif, est susceptible d'altérer la surface de la feuille de verre. Ce n'est pas le cas du résidu de décomposition du carbonate basique de magnésium, MgO, qui est inerte.

Deux séries d'essais (série 4 comparative et série 5 selon l'invention) ont été réalisées sur une ligne industrielle de fabrication de pare-brise. Le bombage est réalisé par pressage sur une forme pleine à des températures de 610-620 °C. Pour chacune des séries d'essais, un agent de séparation en poudre a été réparti de façon homogène sur la surface de la feuille de verre. L'agent de séparation utilisé est respectivement un carbonate de calcium de formule CaCO₃ pour la série 4, et un carbonate basique de magnésium de formule 4 MgCO₃ · Mg(OH)₂ · 5 H₂O pour la série 5. Après bombage, les défauts optiques des feuilles de verre ont été observés par ombroscopie. Le nombre de défauts optiques observés a été significativement réduit sur les feuilles de verre de la série 5 par rapport à celles de la série 4. Cet essai industriel confirme donc l'intérêt de l'agent de séparation selon l'invention pour réduire le nombre de défauts optiques dans la fabrication de vitrages bombés feuilletés.

## Revendications

1. Procédé de bombage simultané de feuilles de verre superposées comprenant :
- la fourniture d'une première feuille de verre ;
- l'application d'un agent de séparation sur une surface de la première feuille de verre ;
- la fourniture d'une deuxième feuille de verre superposée sur la première feuille de verre, l'agent de séparation étant entre la première feuille de verre et la deuxième feuille de verre ;
- le chauffage des feuilles de verre à une température comprise entre 590 et 670°C autorisant leur bombage ; et
- le bombage simultané des feuilles de verre ;
**caractérisé en ce que** l'agent de séparation génère un dégagement gazeux dans les conditions du bombage.

2. Procédé selon la revendication 1, **caractérisé en ce que** le volume de gaz libéré par l'agent de séparation entre 450 et 640 °C est d'au moins 0,05 L/g.

3. Procédé selon l'une quelconque des revendications 1 ou 2, **caractérisées en ce que** le dégagement gazeux est un dégagement d'eau et/ou de dioxyde de carbone.

4. Procédé selon l'une quelconque des revendications 1 à 3, **caractérisé en ce que** l'agent de séparation est appliqué sous forme de poudre.

5. Procédé selon la revendication 4, **caractérisé en ce que** la poudre présente une granulométrie inférieure à 150 µm, de préférence inférieure à 100 µm, typiquement de 1 à 80 µm, voire de 5 à 60 µm.

6. Procédé selon l'une quelconque des revendications 1 à 5, **caractérisé en ce que** l'agent de séparation est appliqué sur la première feuille de verre à raison d'au moins 0,1 g/m².

7. Procédé selon l'une quelconque des revendications 1 à 5, **caractérisé en ce que** l'agent de séparation est choisi parmi la famille des carbonates, les hydroxydes d'alumine, les silicates mixtes hydratés ou un mélange de ceux-ci.

8. Procédé selon l'une quelconque des revendications 1 à 7, **caractérisé en ce que** l'agent de séparation comprend un carbonate acide de magnésium, un carbonate basique de magnésium, chacun étant éventuellement hydratés, ou leurs mélanges.

9. Procédé selon l'une quelconque des revendications 1 à 8, **caractérisé en ce que** les feuilles de verres présentent une épaisseur d'au plus 2,1 mm, de préférence au plus 1,6 mm.

10. Procédé selon l'une quelconque des revendications 1 à 9, **caractérisé en ce que** la deuxième feuille de verre est plus mince que la première feuille de verre.

11. Procédé selon la revendication 10, **caractérisé en ce que** la deuxième feuille de verre présente une épaisseur d'au plus 1,5 mm, de préférence d'au plus 1,1 mm, voire inférieure à 1 mm ou même inférieure ou égale à 0,7 mm.

12. Procédé selon l'une quelconque des revendications 1 à 11, **caractérisé en ce que** les feuilles de verre, au point situé sur la normale à sa surface passant par son barycentre, atteignent une température comprise entre 590 et 670 °C.

13. Procédé selon l'une quelconque des revendications 1 à 12, **caractérisé en ce que** le bombage est un bombage par pressage.

14. Procédé de fabrication d'un vitrage feuilleté comprenant un procédé de bombage simultané de feuilles de verre superposées selon l'une quelconque des revendications 1 à 13 et une étape de feuilletage des deux feuilles de verre avec un intercalaire polymérique.

15. Procédé selon la revendication 14, **caractérisé en ce qu'**il comprend, avant l'étape de feuilletage, une étape de trempe chimique de la deuxième feuille de verre.

## Patentansprüche

1. Verfahren zum gleichzeitigen Biegen übereinanderliegender Glasscheiben, umfassend:
- Bereitstellen einer ersten Glasscheibe;
- Aufbringen eines Trennmittels auf eine Oberfläche der ersten Glasscheibe;
- Bereitstellen einer zweiten Glasscheibe, die auf die erste Glasscheibe aufgelegt wird, wobei sich das Trennmittel zwischen der ersten und der zweiten Glasscheibe befindet;
- Erwärmen der Glasscheiben auf eine Temperatur zwischen 590 und 670 °C, was das Biegen von diesen ermöglicht; und
- gleichzeitiges Biegen der Glasscheiben;
**dadurch gekennzeichnet, dass** das Trennmittel unter den Bedingungen des Biegens eine Gasfreisetzung erzeugt.

2. Verfahren nach Anspruch 1, **dadurch gekennzeichnet, dass** das Gasvolumen, das vom Trennmittel zwischen 450 und 640 °C freigesetzt wird, mindestens 0,05 l/g beträgt.

3. Verfahren nach einem der Ansprüche 1 oder 2,
**dadurch gekennzeichnet, dass** es sich bei der Gasfreisetzung um die Freisetzung von Wasser und/oder Kohlendioxid handelt.

4. Verfahren nach einem der Ansprüche 1 bis 3,
**dadurch gekennzeichnet, dass** das Trennmittel in Pulverform aufgebracht wird.

5. Verfahren nach Anspruch 4, **dadurch gekennzeichnet, dass** das Pulver eine Korngröße von weniger als 150 µm, vorzugsweise weniger als 100 µm, typischerweise von 1 bis 80 µm oder sogar von 5 bis 60 µm, aufweist.

6. Verfahren nach einem der Ansprüche 1 bis 5,
**dadurch gekennzeichnet, dass** das Trennmittel in einer Menge von mindestens 0,1 g/m² auf die erste Glasscheibe aufgetragen wird.

7. Verfahren nach einem der Ansprüche 1 bis 5,
**dadurch gekennzeichnet, dass** das Trennmittel aus der Gruppe der Carbonate, Aluminiumhydroxide, hydratisierten Mischsilikate oder einer Mischung dieser Substanzen ausgewählt wird.

8. Verfahren nach einem der Ansprüche 1 bis 7,
**dadurch gekennzeichnet, dass** das Trennmittel ein saures Magnesiumcarbonat, ein basisches Magnesiumcarbonat, jeweils optional hydratisiert, oder Mischungen davon umfasst.

9. Verfahren nach einem der Ansprüche 1 oder 8,
**dadurch gekennzeichnet, dass** die Glasscheiben eine Dicke von höchstens 2,1 mm, vorzugsweise höchstens 1,6 mm, aufweisen.

10. Verfahren nach einem der Ansprüche 1 bis 9,
**dadurch gekennzeichnet, dass** die zweite Glasscheibe dünner ist als die erste Glasscheibe.

11. Verfahren nach Anspruch 10, **dadurch gekennzeichnet, dass** die zweite Glasscheibe eine Dicke von höchstens 1,5 mm, vorzugsweise höchstens 1,1 mm, oder sogar kleiner als 1 mm oder sogar kleiner als oder gleich 0,7 mm, aufweist.

12. Verfahren nach einem der Ansprüche 1 bis 11,
**dadurch gekennzeichnet, dass** die Glasscheiben an dem Punkt auf der Normalen zu ihrer Oberfläche, der durch ihren Schwerpunkt verläuft, eine Temperatur zwischen 590 und 670 °C erreichen.

13. Verfahren nach einem der Ansprüche 1 bis 12,
**dadurch gekennzeichnet, dass** das Biegen ein Biegen durch Pressen ist.

14. Verfahren zur Herstellung eines Verbundglases, umfassend ein Verfahren zum gleichzeitigen Biegen übereinanderliegender Glasscheiben nach einem der Ansprüche 1 bis 13 und einen Schritt des Laminierens der beiden Glasscheiben mit einer Polymerzwischenschicht.

15. Verfahren nach Anspruch 14, **dadurch gekennzeichnet, dass** es vor dem Laminierungsschritt einen chemischen Härtungsschritt der zweiten Glasscheibe umfasst.

## Claims

1. A process for simultaneous bending of superposed glass sheets comprising:
- the provision of a first glass sheet;
- the application of a parting agent to one surface of the first glass sheet;
- the provision of a second glass sheet superposed on the first glass sheet, the parting agent being between the first glass sheet and the second glass sheet;
- the heating of the glass sheets at a temperature between 590 and 670°C that allows the bending thereof; and
- the simultaneous bending of the glass sheets;
**characterized in that** the parting agent generates gas evolution under the bending conditions.

2. The process as claimed in claim 1, **characterized in that** the volume of gas released by the parting agent between 450°C and 640°C is at least 0.05 l/g.

3. The process as claimed in either one of claims 1 and 2, **characterized in that** the gas evolution is an evolution of water and/or carbon dioxide.

4. The process as claimed in any one of claims 1 to 3, **characterized in that** the parting agent is applied in powder form.

5. The process as claimed in claim 4, **characterized in that** the powder has a particle size of less than 150 µm, preferably of less than 100 µm, typically of from 1 to 80 µm, or from 5 to 60 µm.

6. The process as claimed in any one of claims 1 to 5, **characterized in that** the parting agent is applied to the first glass sheet in a proportion of at least 0.1 g/m².

7. The process as claimed in any one of claims 1 to 5, **characterized in that** the parting agent is chosen from the family of carbonates, alumina hydroxides, hydrated mixed silicates or a mixture thereof.

8. The process as claimed in any one of claims 1 to 7, **characterized in that** the parting agent comprises an acid magnesium carbonate, a basic magnesium carbonate, each optionally being hydrated, or mixtures thereof.

9. The process as claimed in any one of claims 1 to 8, **characterized in that** the glass sheets have a thickness of at most 2.1 mm, preferably at most 1.6 mm.

10. The process as claimed in any one of claims 1 to 9, **characterized in that** the second glass sheet is thinner than the first glass sheet.

11. The process as claimed in claim 10, **characterized in that** the second glass sheet has a thickness of at most 1.5 mm, preferably of at most 1.1 mm, or less than 1 mm or even less than or equal to 0.7 mm.

12. The process as claimed in any one of claims 1 to 11, **characterized in that** the sheets of glass, at the point located on the normal to its surface passing through its barycenter, reach a temperature of between 590°C and 670°C.

13. The process as claimed in any one of claims 1 to 12, **characterized in that** the bending is press bending.

14. A process for manufacturing a laminated glazing comprising a process for simultaneous bending of superposed glass sheets according to any one of claims 1 to 13 and a step of laminating the two glass sheets with a polymer interlayer.

15. The process as claimed in claim 14, **characterized in that** it comprises, before the laminating step, a step of chemical tempering of the second glass sheet.
